# EUROPÄISCHE PATENTSCHRIFT

(11) **EP 1 068 110 B1**
(45) Veröffentlichungstag und Bekanntmachung des Hinweises auf die Patenterteilung: **17.04.2002**
(21) Anmeldenummer: 99917789.2
(22) Anmeldetag: 18.03.1999
(51) Int. Cl.: B60R 21/32, B60R 16/02

(54) **VORRICHTUNG ZUR ANSTEUERUNG VON RÜCKHALTEEINRICHTUNGEN IN EINEM FAHRZEUG MITTELS GLEICHARTIG AUFGEBAUTER DATENVERARBEITUNGSEINHEITEN**
DEVICE FOR CONTROLLING RESTRAINT DEVICES IN AN AUTOMOBILE USING SIMILARLY CONSTRUCTED DATA PROCESSING UNITS
DISPOSITIF PERMETTANT DE COMMANDER DES EQUIPEMENTS DE RETENUE D'UN VEHICULE A L'AIDE D'UNITES DE TRAITEMENT DES DONNEES DE CONCEPTION IDENTIQUE

(30) Priorität: 28.03.1998 DE 19813943
(43) Veröffentlichungstag der Anmeldung: 17.01.2001
(73) Patentinhaber: ROBERT BOSCH GMBH, 70442 Stuttgart (DE); Conti Temic microelectronic GmbH, 90411 Nürnberg (DE)
(72) Erfinder: NITSCHKE, Werner, D-71254 Ditzingen (DE); KARL, Otto, D-71229 Leonberg (DE); BAUER, Joachim, D-71720 Oberstenfeld (DE); BISCHOFF, Michael, D-85111 Adelschlag (DE); FENDT, Günter, D-86529 Schrobenhausen (DE); RINKENS, Johannes, D-85055 Ingolstadt (DE); SCHÄFFER, Stefan, D-86529 Schrobenhausen (DE); BAUR, Richard, D-85276 Pfaffenhofen (DE)
(86) Internationale Anmeldenummer: DE9900756
(87) Internationale Veröffentlichungsnummer: WO9950104

(56) Entgegenhaltungen:
- EP-A- 0 471 871
- EP-A- 0 813 321
- DE-A- 3 811 217
- DE-A- 19 519 130
- US-A- 5 606 556

## Beschreibung

### Stand der Technik

Die vorliegende Erfindung betrifft eine Vorrichtung zur Ansteuerung von Rückhalteeinrichtungen in einem Fahrzeug gemäß dem Oberbegriff des Patentanspruch 1.

Die Leistungsfähigkeit der Rückhaltesysteme in Fahrzeugen wird künftig stark zunehmen, um den Schutz der Fahrzeuginsassen weiter zu verbessern. Das bedeutet, daß die Zahl der Rückhalteeinrichtungen und deren zugehörige Auslösemittel im Fahrzeug drastisch ansteigen wird. Zu diesen Rückhalteeinrichtungen gehören dann z.B. Airbags für den Fahrer und Beifahrer, wobei diese mehrstufig gezündet werden können, Kniebags für Fahrer und Beifahrer, Seitenairbags für Fahrer, Beifahrer und Fond-Insassen, wobei Seitenairbags sowohl für den Kopf- als auch Thoraxbereich vorgesehen werden können, Gurtstrammer, die auch mehrstufig aktivierbar sind, eventuell auch Überrollbügel etc.. Es wird also für jeden Fahrzeuginsassen ein komplexes Schutzsystem, das aus mehreren Rückhalteeinrichtungen besteht, im Fahrzeug installiert sein.

In den Conference Proceedings des SAE International Congress & Exposition, 24. - 27.02.1997 Detroit, wird in dem Beitrag "Bussystem zur Vernetzung von Aktuatoren für Rückhaltesysteme" von J. Bauer, G. Mehler, W. Nitschke ein komplexes Rückhaltesystem beschrieben. Durch Einführung eines Bussystems, das alle Rückhalteeinrichtungen miteinander vernetzt, konnten voluminöse Kabelbäume eingespart werden. Für jede Rückhalteeinrichtung ist bei diesem bekannten System eine Datenverarbeitungseinheit vorgesehen, die im wesentlichen eine Recheneinheit, Daten-Eingangs- und Ausgangsschaltungen, eine Speichereinheit, eine Zeit- und Taktbasis und eine Stromversorgung aufweist. Diese auch als periphere intelligente Zündendstufe bezeichnete Datenverarbeitungseinheit ist in unmittelbarer Nähe des zu der jeweiligen Rückhalteeinrichtung gehörenden Auslösemittels, nämlich in einem Zündpillenstecker oder auf einem Substrat der Zündpille selbst, angeordnet.

Von einer zentralen Steuereinheit aus erhält jede Datenverarbeitungseinheit über eine Busleitung ihre Versorgungsenergie. Außerdem ermittelt die zentrale Steuereinheit anhand mehrerer Sensorsignale - z.B. von Beschleunigungssensoren, Precrashsensoren, Sitzbelegungssensoren - welche Rückhalteeinrichtungen auszulösen sind. Dementsprechend adressiert die zentrale Steuereinheit mit Hilfe eines über die Busleitung übertragenen Protokolls die betroffenen Datenverarbeitungseinheiten. Auch Diagnoseanforderungen gehen von der zentralen Steuereinheit aus über die Busleitung an die einzelnen Datenverarbeitungseinheiten, welche ihre Diagnoseantworten wiederum an die zentrale Steuereinheit über den Bus zurücksenden.

Dadurch, daß alle Datenverarbeitungseinheiten gleichartig aufgebaut sind, entsteht eine hohe Flexibilität bei der Auslegung des Rückhaltesystems für verschiedene Ausstattungsvarianten.

Je größer die Zahl der von einer zentralen Steuereinheit gesteuerten und über den Bus miteinander vernetzten Datenverarbeitungseinheiten ist, desto problematischer wird die Realisierung eines Echtzeitbetriebs, der im Auslosefall unbedingt gewährleistet sein muß.

Ein ähnliches Rückhaltesystem, bei dem die Ansteuerung einer jeden Rückhaltekomponente (z. B Airbags, Gurtstraffer) durch einen ihr zugeordneten Prozessor erfolgt, ist aus der DE 195 19 130 A1 (Oberbegriff des Anspruchs 1) bekannt. Eine Auslösung einer Rückhaltekomponente veranlaßt der ihr zugeordnete Prozessor ausschließlich dann, wenn dieser Prozessor von einer Zentralelektronik einen Auslösebefehl erhält. Ein Solcher Auslösebefehl wird von der Zentralelektronik in Abhängigkeit von Crashsensorsignalen generiert. Der optimale Reaktionsmodus für die jeweilige Rückhaltekomponente wird vom zugehörigen Prozessor aus Signalen von Sitzpositions- , Kindersitzerkennungs-, Sitzbelegungs- und Gurtanlegesensoren berechnet.

Der Erfindung liegt die Aufgabe zugrunde, eine Vorrichtung der eingangs genannten Art anzugeben, die einen zuverlässigen Echtzeitbetrieb des Rückhaltesystems gewährleistet und jedem Insassen individuell einen möglichst sicheren Schutz bei verschiedensten Unfallsituationen bietet.

### Vorteile der Erfindung

Die genannte Aufgabe wird mit den Merkmalen des Anspruchs 1 dadurch gelöst, daß jede Datenverarbeitungseinheit unabhängig von anderen Datenverarbeitungseinheiten eigenständig über ein Auslösen einer oder mehrerer ihr zugeordneter Rückhalteeinrichtungen entscheidet.

Die erfindungsgemäße Vorrichtung mit Datenverarbeitungseinheiten, welche autark die Auslösung der ihnen zugeordneten Rückhalteeinrichtungen veranlassen können, gewährleistet einen zuverlässigeren Echtzeitbetrieb als das System gemäß dem Stand der Technik, bei dem eine rein zentrale Steuerung der einzelnen Datenverarbeitungseinheiten erfolgt.

Da eine Datenverarbeitungseinheit nach der Erfindung mehrere Rückhalteeinrichtungen steuern kann, ist mit einer solchen Datenverarbeitungseinheit ein komplettes auf einen Fahrzeuginsassen bezogenes, autark arbeitendes Rückhaltesystem realisierbar. Damit läßt sich der individuelle Schutz der Fahrzeuginsassen besser auf die jeweilige Unfallsituation und Unfallschwere eintellen.

Dadurch, daß alle Datenverarbeitungseinheiten gleichartig aufgebaut sind, d.h. die gleiche Hardwarestruktur aufweisen, lassen sich ganz unterschiedliche Ausstattungsvarianten des Rückhaltesystems mit geringem Aufwand verwirklichen; denn jede Datenverarbeitungseinheit läßt sich jeder Rückhalteeinrichtung oder jeder Kombination von mehreren Rückhalteeinrichtungen zuordnen. Das System erhält dadurch eine hohe Flexibilität.

Vorteilhafte Weiterbildungen der Erfindung gehen aus den Unteransprüchen hervor. So können entweder alle im Fahrzeug vorhandenen Datenverarbeitungseinheiten über eine einzige Busleitung oder Gruppen von Datenverarbeitungseinheiten über getrennte Busleitungen mit einer oder mehreren zentralen Steuereinheiten verbunden sein, welche einzelne Funktionen der Datenverarbeitungseinheiten steuern. Die Busleitungen können z.B. Ring- oder Stichleitungen sein. Den Datenverarbeitungseinheiten können beispielsweise von der (den) zentralen Steuereinheit(en) über die Busleitung Signale zur Stromversorgung und/oder Synchronisationsignale für die Zeit- und Taktbasis und/oder Steuersignale für einen Längsschalter, über den die jeweilige Datenverarbeitungseinheit die Busleitung durchschalten oder auftrennen kann, und/oder Steuersignale zur Initiierung einer Diagnoseprozedur der Auslöseelemente und/oder ein Stopsignal, das die Auslösung von Rückhalteeinrichtungen unterbindet, übertragen werden. Zweckmäßigerweise ist bzw. sind die zentralen Steuereinheiten von der gleichen Struktur wie die Datenverarbeitungseinheiten.

### Beschreibung von Ausführungsbeispielen

Anhand von in der Zeichnung dargestellten Ausführungsbeispielen wird nachfolgend die Erfindung näher erläutert. Es zeigen:
Figur 1 ein Blockschaltbild einer Datenverarbeitungseinheit und
Figur 2 ein Blockschaltbild mit mehreren an verschiedenen Busleitungen angeschlossenen Datenverarbeitungseinheiten.

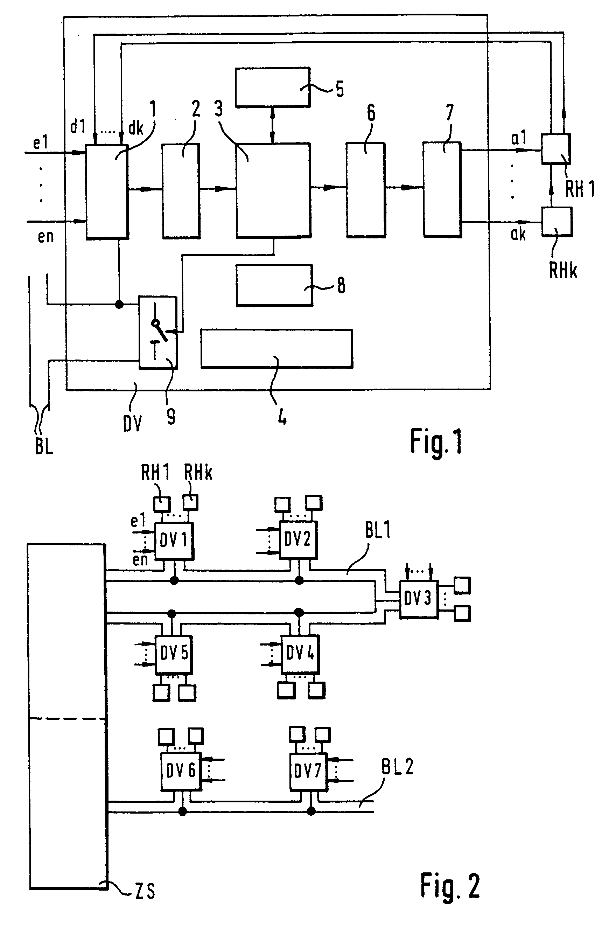

In der Figur 1 ist eine Datenverarbeitungseinheit DV dargestellt, welche für die Ansteuerung eines oder mehrerer Rückhalteeinrichtungen in einem Fahrzeug vorgesehen ist. In dem gezeigtem Ausführungsbeispiel sind an die Datenverarbeitungseinheit DV mehrere Rückhalteeinrichtungen RH1 bis RHk angeschlossen. Vorzugsweise ist diese Gruppe von k Rückhalteeinrichtungen RH1 bis RHk einem Fahrzeuginsassen zugeordnet. Handelt es sich z.B. um den Beifahrer, dann könnten zu den Rückhalteeinrichtungen RH1 bis RHk ein Frontairbag, ein oder zwei Seitenairbags im Kopf- oder Thoraxbereich, ein Kniebag und ein Gurtstrammer gehören, wobei alle Airbags und der Gurtstrammer auch mehrstufig auslösbar sein können. Für jede dieser Rückhalteeinrichtungen generiert die Datenverarbeitungseinheit DV im Crash-Fall ein Auslösesignal a1 bis ak, wobei die Auswahl der auszulösenden Rückhalteeinrichtungen und die Auslösezeitpunkte in Abhängigkeit von mehreren Eingangssignalen e1 bis en getroffen werden. Die Eingangssignale el bis en stammen z.B. von Sensoren, zu denen ein oder mehrere das kinetische Verhalten des Fahrzeugs bei einem Crash erfassende Beschleunigungssensoren, Precrashsensoren, ein Gurtschloßsensor und Sitzbelegungssensoren gehören können. Aus den Sitzbelegungssensorsignalen leitet die Datenverarbeitungseinheit DV ab, ob der Beifahrersitz überhaupt belegt ist, ob ein Kind oder ein Erwachsener dort sitzt und auch welche Sitzhaltung der Beifahrer hat, so daß dementsprechend nur solche Rückhalteeinrichtungen ausgelöst werden, die der Person überhaupt einen Schutz bieten können und sie nicht sogar eher verletzen würden. Ebenso wird die Auslösung der Rückhalteeinrichtungen ganz unterdrückt, wenn der Beifahrersitz gar nicht belegt ist oder sich darauf ein Kindersitz oder ein Gepäckstück befindet.

Anders als bei dem einleitend zitierten Stand der Technik, bei dem die Auswertung der Sensorsignale in einer zentralen Steuereinheit erfolgt und daraus abgeleitete Auslösesignale über das Bussystem zu den peripheren Zündendstufen der betroffenen Rückhalteeinrichtungen übertragen werden, arbeitet die Datenverarbeitungseinheit DV autark für die ihr zugeordneten Rückhalteeinrichtungen RHl bis RHk und ist nicht auf zentral hergeleitete Auslöseinformationen angewiesen.

In der Figur 1 sind die einzelnen Funktionselemente innerhalb der Datenverarbeitungseinheit DV in Form von Blöcken angedeutet. Es gibt eine Signal-Eingangsschaltung 1 für die Aufnahme analoge oder digitaler Eingangssignale el bis en. Diese Signal-Eingangsschaltung 1 enthält z.B. Signaltreiber und eventuell einen Multiplexer für die Umwandlung parallel anliegender Eingangssignale in einen seriellen Datenstrom. In der anschließenden Datenaufbereitungsschaltung 2 kann eine Analog-Digital-Umsetzung analoger Eingangssignale erfolgen; in jedem Fall werden hier die Daten so aufbereitet, daß sie von einer nachfolgenden Recheneinheit 3 digital weiterverarbeitet werden können.

Die Recheneinheit 3 erledigt sämtliche Steuerfunktionen in der Datenverarbeitungseinheit DV. Z.B. ermittelt sie aus den Eingangssignalen el bis en, welche der angeschlossenen Rückhalteeinrichtungen RHl bis RHk zu welchen Zeitpunkten ausgelöst werden sollen. Auch führt sie eine Diagnose der Zündelemente in den Rückhalteeinrichtungen RH1 bis RHk durch. Dadurch werden die Diagnosesignale d1 bis dk - das sind z.B. Widerstandswerte der Zündelemente - der Signal-Eingangsschaltung 1 zugeführt. Die Recheneinheit 3 vergleicht die Diagnosesignale d1 bis dk mit Referenzwerten und gibt bei unzulässigen Abweichungen eine Fehlermeldung aus. Auch wird eine Diagnose einer Energiereserve, die sich in einem Stromversorgungsteil 4 befindet, durchgeführt. Eine Speichereinheit 5 dient der Aufnahme von temporären Daten, wie z.B. Zündelementwiderstände und Energiezustände der Energiereserve etc, ebenso können fertigungsspezifische Daten und Kennungsdaten in der Speichereinheit 5 abgelegt werden. Die Recheneinheit 3 kann auf die Daten der Speichereinheit 5 zugreifen und neue Daten darin einschreiben.

Entsprechend der Eingangsseite der Datenverarbeitungseinheit DV folgen ausgangsseitig nach der Recheneinheit 3 eine Datenaufbereitungsschaltung 6 und eine Signal-Ausgangsschaltung 7. In der Datenaufbereitungsschaltung 6 werden z.B. die digitalen Auslöseinformationen oder Diagnoseabfragesignale aus der Recheneinheit 3 in Zündströme oder Prüfströme für die Zündelemente der Rückhalteeinrichtungen RH1 bis RHk umgesetzt. Die Signal-Ausgangsschaltung 7 ist mit Signaltreibern und eventuell einem Demultiplexer ausgestattet, der einen seriellen Ausgangssignal-Datenstrom in die einzelnen parallelen Ausgangssignale a1 bis ak aufteilt.

Eine in der Datenverarbeitungseinheit DV vorhandene Zeitund Taktbasis 8 versorgt alle Funktionsblöcke mit einem einheitlichen synchronen Takt.

Natürlich ist die in Figur 1 dargestellte Aufteilung der Funktionsblöcke nicht zwingend. Es können z.B. die Signal-Eingangsschaltung 1 und die Datenaufbereitungsschaltung 2 bzw. die Signal-Ausgangsschaltung 6 und die Datenaufbereitungsschaltung 7 miteinander kombiniert werden und auch teilweise in der Recheneinheit 3 integriert werden. Ebenso können die Stromversorgung 4 und/oder die Zeit- und Taktbasis in den Datenaufbereitungsschaltungen 2, 6 integriert werden. Hier sind viele Möglichkeiten gegeben, mehrere Funktionen in einem Schaltblock zusammenzufassen.

Wie gesagt, kann jede Datenverarbeitungseinheit DV vollständig autark die ihr zugeordneten Rückhalteeinrichtungen RH1 bis RHk ansteuern.

Wie der Figur 1 zu entnehmen ist, ist die Datenverarbeitungseinheit DV für den Fall, daß sie einige Steuersignale über eine Busleitung BL erhält, mit einem sogenannten Längsschalter 9 ausgestattet, über den nachfolgende Datenverarbeitungseinheiten DV an die Busleitung BL angeschaltet oder von ihr getrennt werden können. Der Längsschalter 9 wird von der Recheneinheit 3 gesteuert. Dabei kann eine Aufforderung zum Schließen oder Öffnen des Längsschalters 9 von einer zentralen Steuereinheit über die Busleitung BL übertragen werden. Somit ist es möglich, einzelne Datenverarbeitungseinheiten gezielt anzusprechen und mit Informationen oder Steuersignalen zu versorgen. Dieses Ausführungsbeispiel ist nicht zur Erfindung gehörig.

In der Figur 2 ist eine zentrale Steuereinheit ZS mit zwei verschiedenen, zweiadrig aufgeführten Busleitungen BL1 und BL2 dargestellt. Die erste Busleitung BL1 ist eine Ringleitung, mit der z.B. fünf Datenverarbeitungseinheiten DV1 bis DV5 gekoppelt sind. Diese Datenverarbeitungseinheiten sind von der in Figur 1 gezeigten Art und weisen neben Anschlüssen für die Busleitung Signaleingänge el bis en für Steuersignale und Ausgangssignalanschlüsse für Rückhalteeinrichtungen RH1 bis RHk auf. Da diese Beschaltung bei allen Datenverarbeitungseinheiten gleich ist, ist beispielhaft nur die Datenverarbeitungseinrichtung DV1 mit Bezugszeichen versehen worden. Die Ringleitung BL1 hat den Vorteil, daß die zentrale Steuereinheit ZS von beiden Seiten her Steuersignale in die Busleitung BL1 einspeisen kann, so daß auch bei einem Kurzschluß oder einer Unterbrechung der Leitung jede Datenverarbeitungseinheit DV1 bis DV5 ansteuerbar ist. Die zweite Busleitung BL2 ist als Stichleitung ausgeführt, mit der z.B. vier Datenverarbeitungseinheiten DV6, DV7 der beschriebenen Art gekoppelt sind.

Während in Figur 2 eine einzige zentrale Steuereinheit ZS für beide Busleitungssysteme BL1 und BL2 dargestellt ist, kann, hier durch die strichlierte Linie angedeutet, für jede Busleitung eine eigene zentrale Steuereinheit vorhanden sein. An jede Busleitung können auch mehrere Steuereinheiten angeschlossen werden, wobei eine oder mehrere Datenverarbeitungseinheiten diese Funktion einer zentralen Steuereinheit übernehmen können. Im übrigen ist es zur Erzielung einer hohen Standardisierung sinnvoll, die zentrale(n) Steuereinheit(en) ZS mit der gleichen Schaltungsstruktur zu realisieren wie die Datenverarbeitungseinheiten DV, DV1, ..., DV7.

Wie in der Figur 2 angedeutet wird, kann es unter Umständen zweckmäßig sein, Gruppen von Datenverarbeitungseinheiten, welche an bestimmten Orten im Fahrzeug konzentriert sind, über eigene Bussysteme BL1, BL2 zu vernetzen.

## Patentansprüche

1. Vorrichtung zur Ansteuerung von Rückhalteeinrichtungen in einem Fahrzeug, wobei Datenverarbeitungseinheiten (DV, DV1, ..., DV7) für die Ansteuerung der Rückhalteeinrichtungen (RE1, ..., RHK) vorgesehen sind und alle Datenverarbeitungseiheiten (DV, DV1, ...,DV7) gleichartig aufgebaut sind und jeweils eine Recheneinheit (3), Signal-Eingangs- und Ausgangsschaltungen (1, 2, 6, 7), eine Zeitund Taktbasis (8), und eine Stromversorgung (4) aufweisen, wobei jede Datenverarbeitungseinheit (DV, DV1 ...,DV7) eigenständig über ein Auslösen einer oder mehrerer ihr zugeordneter Rückhalteeinrichtungen (RH1,...,RHK) entscheidet, **dadurch gekennzeichnet, daß** jede Datenverarbeitungseinheit (DV, DV1, ..., DV7) unabhängig von anderen Datenverarbeitungseinheiten über das Auslösen einer oder mehrerer ihr zugeordneter Rückhalteeinrichtungen (RH1, ..., RHK) entscheidet.

2. Vorrichtung nach Anspruch 1, **dadurch gekennzeichnet, daß** der Datenverarbeitungseinheit (DV, DV1, ..., DV7) mehrere parallele Eingangssignale (e1, ..., en) zuführbar sind und daß von der Datenverarbeitungseinheit (DV, DV1, ..., DV7) in Abhängigkeit von den Eingangssignalen (e1, ..., en) mehrere Ausgangssignale (a1, ..., ak) als Auslösesignale für mehrere Rückhalteeinrichtungen (RH1, ..., RHk) generierbar sind.

3. Vorrichtung nach Anspruch 1, **dadurch gekennzeichnet, daß** Eingangssignale (e1, ..., en) von Sensoren stammen, vorzugsweise von Beschleunigungssensoren und/oder Precrashsensoren und/oder Sitzbelegungssensoren und/oder Gurtschloßsensoren.

4. Vorrichtung nach Anspruch 1 oder 2, **dadurch gekennzeichnet, daß** entweder alle im Fahrzeug vorhandenen Datenverarbeitungseinheiten über eine einzige Busleitung oder Gruppen von Datenverarbeitungseinheiten (DV1, ..., DV5; DV6, DV7) über getrennte Busleitungen (BL1, BL2) mit einer oder mehreren zentralen Steuereinheiten (ZS) verbunden sind, welche einzelne Funktionen der Datenverarbeitungseinheiten (DV1, ..., DV7) steuern.

5. Vorrichtung nach Anspruch 4, **dadurch gekennzeichnet, daß** die Busleitungen (BL1, BL2) Ring- oder Stichleitungen sind.

6. Vorrichtung nach Anspruch 4, **dadurch gekennzeichnet, daß** die zentrale Steuereinheit (ZS) bzw. die zentralen Steuereinheiten von der gleichen Struktur wie die Datenverarbeitungseinheiten (DV) ist bzw. sind.

## Claims

1. Device for actuating restraining devices in a vehicle, data processing units (DV, DV1,..., DV7) for actuating the restraining devices (RH1, ..., RHK) being provided and all the data processing units (DV, DV1, ..., DV7) being of identical design and having in each case an arithmetic unit (3), signal input and output circuits (1, 2, 6, 7), a time base and clock base (8) and a power supply (4), each data processing unit (DV, DV1, ..., DV7) deciding independently on the triggering of one or more restraining devices (RH1, ..., RHK) assigned to it, **characterized in that** each data processing unit (DV, DV1, ..., DV7) decides independently of other data processing devices on the triggering of one or more restraining devices (RH1, ..., RHK) assigned to it.

2. Device according to Claim 1, **characterized in that** a plurality of parallel input signals (e1, ..., en) can be fed to the data processing unit (DV, DV1, ..., DV7), and **in that** a plurality of output signals (a1, ..., ak) can be generated as triggering signals for a plurality of restraining devices (RH1, ..., RHk), by the data processing unit (DV, DV1, ..., DV7) as a function of the input signals (e1, ..., en).

3. Device according to Claim 1, **characterized in that** the input signals (e1, ..., en) originate from sensors, preferably from acceleration sensors and/or pre-crash sensors and/or seat occupation sensors and/or seat belt lock sensors.

4. Device according to Claim 1 or 2, **characterized in that** either all of the data processing units present in the motor vehicle are connected via a single bus line, or groups of data processing units (DV1, ..., DV5, DV6, DV7) are connected via separate bus lines (BL1, BL2) to one or more central control units (ZS) which control individual functions of the data processing units (DV1, ..., DV7).

5. Device according to Claim 4, **characterized in that** the bus lines (BL1, BL2) are ring feeders or spur lines.

6. Device according to Claim 4, **characterized in that** the central control unit (ZS) or the central control units has/have the same structure as the data processing units (DV).

## Revendications

1. Dispositif de commande des installations de retenue d'un véhicule comportant des unités de traitement de données (DV, DV1... DV7) pour commander leurs installations de retenue (RH1...RHk), dont toutes les unités de traitement de données (DV, DV1...DV7) ont la même conception et comprennent chacune une unité de calcul (3), des circuits d'entrée et de sortie de signal (1, 2, 6, 7), une base de temps et de cadence (8) et une alimentation électrique (4), chaque unité de traitement de données (DV, DV1...DV7) décidant en propre du déclenchement d'une ou plusieurs installations de retenue (RH1...RHk) qui lui sont associées,
**caractérisé en ce que**
chaque unité de traitement de données (DV, DV1...DV7) décide indépendamment des autres unités de traitement de données du déclenchement d'une ou plusieurs installations de retenue (RH1...RHk) associées.

2. Dispositif selon la revendication 1,
**caractérisé en ce que**
l'unité de traitement de données (DV, DV1...DV7) reçoit plusieurs signaux d'entrée en parallèle (e1...en) et,
l'unité de traitement de données (DV, DV1...DV7) génère en fonction des signaux d'entrée (e1...en), plusieurs signaux de sortie (a1...ak) comme signaux de déclenchement destinés à plusieurs installations de retenue (RH1... RHk).

3. Dispositif selon la revendication 1,
**caractérisé en ce que**
les signaux d'entrée (e1...en) proviennent de plusieurs capteurs de préférences des capteurs d'accélération et/ou des capteurs de précollision et/ou des capteurs d'occupation de siège et/ou des capteurs de fermeture de ceinture.

4. Dispositif selon la revendication 1 ou 2,
**caractérisé en ce que**
soit toutes les unités de traitement de données du véhicule sont reliées par un unique bus ou des groupes d'unités de traitement de données (DV...DV5 ; DV6, DV7) sont reliés par des bus distincts (BL1, BL2) à une ou plusieurs unités de commande centrales (ZS), et elles commandent différentes fonctions des unités de traitement de données (DV1...DV7).

5. Dispositif selon la revendication 4,
**caractérisé en ce que**
les lignes de bus (BL1, BL2) sont des anneaux ou des lignes ouvertes.

6. Dispositif selon la revendication 4,
**caractérisé en ce que**
l'unité de commande centrale (ZS) ou les unités de commande centrales ont la même structure que les unités de traitement de données (DV).
